(19) Europäisches Patentamt
European Patent Office
Office européen des brevets

(11) **EP 3 153 317 A1**

(12) **EUROPÄISCHE PATENTANMELDUNG**

(43) Veröffentlichungstag:
**12.04.2017 Patentblatt 2017/15**

(51) Int Cl.:
*B32B 27/08* (2006.01)  *B32B 27/16* (2006.01)
*B32B 27/26* (2006.01)  *B32B 27/30* (2006.01)
*B32B 27/32* (2006.01)  *E04D 5/00* (2006.01)

(21) Anmeldenummer: **15189026.6**

(22) Anmeldetag: **08.10.2015**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA**

(71) Anmelder: **Sika Technology AG**
**6340 Baar (CH)**

(72) Erfinder:
• **Keiser, Stefan**
**6103 Schwarzenberg (CH)**
• **Quinzler, Dorothee**
**6055 Alpnach Dorf (CH)**
• **Gössi, Matthias**
**8610 Uster (CH)**

(74) Vertreter: **Sika Patent Attorneys**
**C/o Sika Technology AG**
**Corp. IP Dept.**
**Tüffenwies 16**
**CH-8048 Zürich (CH)**

(54) **MEHRSCHICHTIGE ABDICHTUNGSMEMBRAN MIT VERNETZTER KERNSCHICHT**

(57) Die vorliegende Erfindung betrifft ein Verfahren zur Herstellung einer Abdichtungsmembran, umfassend a) die Bildung eines Membranvorprodukts umfassend in dieser Reihenfolge eine thermoplastische Rückseitenschicht, die mindestens ein Ethylen-Copolymer und/oder mindestens ein Ethylen-Homopolymer enthält; eine Kernschicht, die (i) mindestens ein Ethylen-Copolymer und einen Photoinitiator oder (ii) mindestens ein Silan-modifiziertes Ethylen-Copolymer, welches Seitengruppen mit einer hydrolysierbaren Silangruppe aufweist, umfasst, wobei das Ethylen-Copolymer und das Silan-modifizierte Ethylen-Copolymer ein thermoplastisches Elastomer sind; und eine thermoplastische Deckschicht, die mindestens ein Ethylen-Copolymer und/oder mindestens ein Ethylen-Homopolymer enthält, und b) die anschließende Vernetzung (i) des mindestens einen Ethylen-Copolymers in der Kernschicht mittels UV-Bestrahlung unter Bildung eines UVvernetzten Ethylen-Copolymers oder (ii) des mindestens einen Silan-modifizierten Ethylen-Copolymers in der Kernschicht mittels Feuchtigkeit unter Bildung eines Silanvernetzten Ethylen-Copolymers.

Das Verfahren ermöglicht die Bereitstellung von hochflexiblen und gleichzeitig temperaturbeständigen Abdichtungsmembranen. Da die Rückseitenschicht thermoplastisch ist, kann die Membran ohne Probleme auf ein Substrat aufgeschweißt werden.

Fig. 1a)

EP 3 153 317 A1

**Beschreibung**

**Technisches Gebiet**

Die Erfindung betrifft mehrschichtige Abdichtungsmembranen, die zur Bauwerksabdichtung geeignet sind, insbesondere zur Abdichtung von Böden oder Dächern.

**Stand der Technik**

Substrate, welche gegen Wasser abgedichtet werden müssen, insbesondere Betonstrukturen, finden sich viele im Hoch- und Tiefbau. Derartige Substrate und Untergründe werden typischerweise durch Bitumenbahnen oder Kunststoffmembranen abgedichtet. Wichtige Anwendungsgebiete für Abdichtungsmembranen sind Boden- und Dachabdichtungen. Neben der thermischen und mechanischen Stabilität werden auch gutes elastisches Verhalten bzw. eine gute Flexibilität gefordert.

Für Dachbahnen werden heute gewöhnlich thermoplastische Polymere mit hohem Schmelzpunkt von über 130°C verwendet. Homo- und Copolymere, die Ethylenbasierte Kristalle ausbilden, sind somit bereits ungeeignet. Es werden deshalb PPbasierte Copolymere z.B. mit einer Schmelztemperatur von 140°C, oder auch PVC mit einer Schmelztemperatur im Bereich von 130-190°C eingesetzt. Alternativ werden chemisch vernetzte Kautschuke verwendet, vor allem EPDM, z.B. Firestone Rubberguard® von Firestone, und PIB, z.B. Rhepanol® von FDT.

Abdichtungsmembranen auf Basis von vernetzten Kautschuken sind sehr flexibel bzw. weisen einen sehr tiefen E-Modul auf. Die Verarbeitung von Kautschuken erfordert aber relativ aufwendige Produktionsanlagen, was die Kosten erhöht. Zudem können chemisch vernetzte Kautschuke nicht verschweißt werden. Das Auftragen einer schweißbaren, d.h. thermoplastischen Schweißschicht auf solche Kautschuke ist aus Verträglichkeitsgründen sehr schwierig.

Vernetzte EPDM-Membranen müssen verklebt werden. Dabei muss der Klebstoff nicht nur Haftung zum EPDM zeigen, er muss auch ausreichend beständig sein, um den mechanischen Belastungen auf die Verbindung Stand zu halten und er muss über eine gute chemische Beständigkeit unter den teilweise harschen Bedingungen auf dem Dach verfügen. Derartige Klebstoffe sind schwierig herzustellen und ihre Applikation stellt hohe Anforderungen und macht die Verbindung aufwändig und anfällig für Fehler.

Thermoplastische Polyolefine sind teilkristalline Polymere. Sie vernetzen physikalisch über die Kristallite. Genau diese kristallinen Lamellen beeinflussen maßgebend die Zugfestigkeit und den E-Modul. Die heute kommerziell erhältlichen Polyolefine mit tiefem Modul werden als thermoplastische Elastomere bezeichnet und sind alle Copolymere von Ethylen mit mindestens einem Comonomeren. Das Comonomer hat den vorrangigen Zweck, die Kristallisation zu stören, und somit den Modul tief zu halten. Leider reduziert das Comonomer aber auch den Schmelzpunkt. Polyolefin-Elastomere mit sehr tiefem E-Modul haben deshalb auch einen tiefen Schmelzpunkt von z.B. etwa 30-40°C.

Um hochflexible, auf Polyolefin basierte Abdichtungsmembranen zu fertigen, würden sich diese Copolymere wegen des tiefen Moduls zwar anbieten, aber es fehlt eine ausreichende Wärmestabilität. Daher sind solche Copolymere für Abdichtungsmembranen in dieser Form nicht geeignet.

Insbesondere bei der Applikation von Abdichtungsmembranen auf der Baustelle ist es vorteilhaft, wenn die Membran eine hohe Flexibilität aufweist. Geschmeidige Membranen lassen sich besser handhaben und insbesondere Details und Anschlüsse lassen sich somit leichter und sicherer ausbilden.

Eine TPO-Formulierung (TPO = Thermoplastische Elastomere auf Olefinbasis) kann durch die Verwendung von flexiblen Polymeren wie niedrig vernetztem EPDM oder Polyolefin-Elastomeren mit niedriger Dichte flexibel eingestellt werden. Der Nachteil hoher Anteile dieser Flexibilisierungskomponenten mit niedrigem Schmelzpunkt liegt häufig in der Klebrigkeit und Blockneigung der Formulierung, insbesondere aber auch in der mangelnden mechanischen Beständigkeit bei erhöhter Temperatur. Formulierungen welche für Abdichtungen eingesetzt werden, müssen aber, insbesondere für die Anwendung als Flachdachabdichtung (Roofing), eine gewisse Temperaturbeständigkeit aufweisen und auch bei erhöhter Temperatur auf dem Dach im Sommer ausreichend robust sein (z.B. Durchtrittsicherheit) und dürfen insbesondere auch bei besonderen Verhältnissen wie Abstrahlung oder Fokussierung von Sonnenlicht nicht schmelzen.

Werden für die Flexibilisierung von TPO-Membranen hohe Anteile von flexiblen Komponenten eingesetzt, wird die Membran durch die tiefere Biegesteifigkeit deutlich verarbeitungsfreundlicher. Praktisch alle mechanischen Eigenschaften verschlechtern sich aber deutlich.

**Darstellung der Erfindung**

Die Aufgabe der vorliegenden Erfindung bestand daher in der Bereitstellung einer Abdichtungsmembran, welche die vorstehend diskutierten Nachteile des Standes der Technik nicht aufweist. Insbesondere sollte die Abdichtungsmembran eine hohe Flexibilität bzw. ein niedriges E-Modul besitzen und gleichzeitig eine gute Wärmefestigkeit aufweisen.

Die Dauerhaftigkeit der Abdichtungsmembran soll erhöht werden und die Applikation erleichtert werden. Ferner soll die Biegesteifigkeit der Membran gesenkt werden.

Des Weiteren sollte es möglich sein, eine schweißbare Abdichtungsmembran bereitzustellen. Zudem soll die Abdichtungsmembran auf einfache Weise herstellbar sein. Die Herstellung sollte möglichst auf üblichen Produktionsanlagen ohne größere Änderungen erfolgen können.

Die Aufgabe konnte überraschenderweise gelöst werden durch Vernetzung eines flexiblen, relativ dicken Kerns aus einem bestimmten thermoplastischen Elastomer insbesondere mit niedriger Dichte, wodurch eine ausreichende Temperaturbeständigkeit erhalten wird. Dabei wird der Kern vor der Vernetzung auf jeder Seite mit jeweils mindestens einer thermoplastischen, dünnen Deckschicht überzogen. Damit kann die Flexibilität erhöht bzw. die Biegesteifigkeit der Membrane gesenkt werden, das Material fühlt sich geschmeidig an, und durch die beidseitige thermoplastische Deckschicht kann es mit gewohnten Verbindungsverfahren wie der Heissluftverschweissung verarbeitet werden.

Dementsprechend betrifft die Erfindung ein Verfahren zur Herstellung einer Abdichtungsmembran, umfassend

a) die Bildung eines Membranvorprodukts umfassend in dieser Reihenfolge eine thermoplastische Rückseitenschicht, die mindestens ein Ethylen-Copolymer und/oder mindestens ein Ethylen-Homopolymer enthält; eine Kernschicht, die (i) mindestens ein Ethylen-Copolymer und einen Photoinitiator oder (ii) mindestens ein Silan-modifiziertes Ethylen-Copolymer, welches Seitengruppen mit einer hydrolysierbaren Silangruppe aufweist, umfasst, wobei das Ethylen-Copolymer und das Silan-modifizierte Ethylen-Copolymer ein thermoplastisches Elastomer sind; und eine thermoplastische Deckschicht, die mindestens ein Ethylen-Copolymer und/oder mindestens ein Ethylen-Homopolymer enthält, und

b) die anschließende Vernetzung (i) des mindestens einen Ethylen-Copolymers in der Kernschicht mittels UV-Bestrahlung unter Bildung eines UV-vernetzten Ethylen-Copolymers oder (ii) des mindestens einen Silan-modifizierten Ethylen-Copolymers in der Kernschicht mittels Feuchtigkeit unter Bildung eines Silan-vernetzten Ethylen-Copolymers.

Durch die Vernetzung des thermoplastischen Elastomers kann dessen Wärmefestigkeit verbessert werden, da die kovalenten Bindungen der Vernetzung auch bei erhöhten Temperaturen Bestand haben und somit das ursprünglich rein physikalisch vernetzte thermoplastische Polymer auch über dessen Schmelzpunkt zusammenhalten. Ferner kann dadurch die Flexibilität erhöht und die Biegesteifigkeit gesenkt werden.

Durch das nachträgliche Vernetzen von thermoplastischen Elastomeren kann ferner z.B. auf üblichen Extrusionsanlagen eine Folie gefertigt werden. Die Silan-Vernetzung von thermoplastischen Elastomeren erfolgt mittels Feuchtigkeit und führt zu einer sehr hohen Beständigkeit in Heisswasser und in Wasser-Glykol-Frostschutzgemischen. Auch ergibt sich ein günstiges Verhalten was die Alterung anbelangt.

Die thermoplastische Rückseitenschicht gewährleistet ferner, dass die erfindungsgemäße Abdichtungsmembran mit gewohnten Verbindungsverfahren wie der Heissluftverschweißung verarbeitet werden kann.

Die Erfindung ermöglicht somit das Herstellen von hochflexiblen und gleichzeitig temperaturbeständigen Abdichtungsmembranen, insbesondere für die Boden- oder Dachabdichtung. Die Herstellung kann auf Produktionsanlagen, die für Abdichtungsmembranen üblich sind, wie z.B. Extrusionsanlagen, erfolgen, wobei lediglich eine zusätzliche Vorrichtung für die UV-Bestrahlung, falls verwendet, benötigt wird.

Ein weiterer Aspekt der Erfindung betrifft die Abdichtungsmembran sowie die Verwendung der Abdichtungsmembran zum Abdichten von Substraten von Bauwerken. Besonders bevorzugte Ausführungsformen der Erfindung sind Gegenstand der abhängigen Ansprüche.

**Kurze Beschreibung der Figuren**

Figuren 1 a) bis c) zeigen theoretische Berechnungen zur Biegesteifigkeit in Abhängigkeit von Kernschichtdicke und E-Modul.

Figur 2 zeigt eine Darstellung zur theoretischen Berechnung der Biegesteifigkeit.

Figur 3 zeigt Querschnitte der Abdichtungsmembranen gemäß der Beispiele 3, 6 und 9.

Figur 4 zeigt einen Querschnitt der Abdichtungsmembranen gemäß Beispiel 10.

Figur 5 zeigt Gelgehalte in der Kernschicht in Abhängigkeit von der Bestrahlungszeit für Beispiel 10.

Figuren 6 und 7 geben Bruchdehnung und Zugfestigkeit von Abdichtungsmembranen gemäß Beispiel 10 für verschiedene Bestrahlungszeiten bei Temperaturen von 23°C bzw. 70°C wieder.

Figur 8 zeigt einen Querschnitt durch eine dreischichtige Abdichtungsmembran mit einem in der Kernschicht eingebetteten Trägermaterial gemäß Beispiel 11.

**Wege zur Ausführung der Erfindung**

Das Membranvorprodukt umfasst in dieser Reihenfolge eine thermoplastische Rückseitenschicht, eine Kernschicht und eine thermoplastische Deckschicht. Bei diesen Schichten handelt es sich jeweils insbesondere um Kunststoffschichten. In einer bevorzugten Ausführungsform sind die Rückseitenschicht und die Deckschicht jeweils unmittelbar auf der Kernschicht angeordnet, d.h. zwischen Rückseitenschicht und Kernschicht einerseits und zwischen Deckschicht und Kernschicht andererseits befinden sich keine weiteren Schichten, wie z.B. Klebschichten.

Die Abdichtungsmembran wird aus dem Membranvorprodukt durch nachträgliche Vernetzung erhalten, d.h. das Membranvorprodukt und die fertige Abdichtungsmembran unterscheiden sich im Wesentlichen nur durch die Vernetzung der Polymere in der Kernschicht in der Abdichtungsmembran.

Deckschicht und Rückseitenschicht sind daher im Membranvorprodukt und in der Abdichtungsmembran in der Zusammensetzung unverändert. In der Kernschicht des Membranvorprodukts liegen die spezifizierten Polymere vollständig oder im Wesentlichen in unvernetzter Form vor, während sie in der Abdichtungsmembran vernetzt sind. Die Abdichtungsmembran ist bevorzugt eine mehrschichtige Folie.

Die Kernschicht des Membranvorprodukts umfasst in einer Ausführungsform mindestens ein Ethylen-Copolymer und einen Photoinitiator oder in einer anderen Ausführungsform mindestens ein Silan-modifiziertes Ethylen-Copolymer, welches Seitengruppen mit einer hydrolysierbaren Silangruppe aufweist. Die folgenden Angaben beziehen sich auf die Kernschicht des Membranvorprodukts bzw. auf das unvernetzte Ethylen-Copolymer oder unvernetzte Silanmodifizierte Ethylen-Copolymer, soweit nicht anders angegeben.

Das Ethylen-Copolymer und das Silan-modifizierte Ethylen-Copolymer sind ein thermoplastisches Elastomer. Thermoplastische Elastomere sind Kunststoffe, die sowohl Elastomere als auch thermoplastische Eigenschaften aufweisen. Angaben zu den Begriffen und zur Nomenklatur finden sich z.B. in der DIN EN ISO 18064.

Bei den Ethylen-Copolymeren handelt es sich um Copolymere von Ethylen und einem oder mehreren, vorzugsweise einem, Comonomeren. Es kann sich dabei um statistische Copolymere oder Blockcopolymere handeln. Bei dem Comonomer kann es sich z.B. um $\alpha$-Olefin, wie But-1-en, Pent-1-en, Hex-1-en oder Oct-1-en, Propylen oder Vinylacetat handeln. Ein $\alpha$-Olefin ist ein Alk-1-en mit mindestens 4 Kohlenstoffatomen. Bevorzugt sind $\alpha$-Olefine mit 4 bis 10 Kohlenstoffatomen, insbesondere mit 4 bis 8 Kohlenstoffatomen.

Konkrete Beispiele sind Ethylen-But-1-en-Copolymer, Ethylen-Hex-1-en-Copolymer, Ethylen-Oct-1-en-Copolymer, Ethylen-Propylen-Copolymer oder Ethylen-Vinylacetat-Copolymer. Copolymere aus einem Ethylen und einem $\alpha$-Olefin lassen sich z.B. über Metallocen-Katalyse herstellen.

Solche Ethylen-Copolymere, die thermoplastische Elastomere darstellen, sind im Handel erhältlich, z.B. unter der Handelsbezeichnungen Evatane® von Arkema, Queo von Borealis, Levamelt® von Lanxess, Engage® von Dow oder Vistamaxx® von ExxonMobile. Konkrete Beispiele sind

| | | | |
|---|---|---|---|
| Evatane®2803 | Arkema | Ethylen-Vinylacetat | VA-Gehalt: 28 Gew.-% |
| Evatane®4055 | Arkema | Ethylen-Vinylacetat | VA-Gehalt: 40 Gew.-% |
| Levamelt®500 | Lanxess | Ethylen-Vinylacetat | VA-Gehalt: 50 Gew.-% |
| Engage®8450 | Dow | Ethylen-1-Octen | Octen-Gehalt: 23 Gew.-% |
| Engage®8200 | Dow | Ethylen-1-Octen | Octen-Gehalt: 39 Gew.-% |
| Engage®8842 | Dow | Ethylen-1-Octen | Octen-Gehalt: 47 Gew.-% |
| Vistamaxx®6102 | Exxon | Ethylen-Propylen | PP-Gehalt: 84 Gew.-% |
| Vistamaxx®3020 | Exxon | Ethylen-Propylen | PP-Gehalt: 89 Gew.-% |

Bei dem Silan-modifizierten Ethylen-Copolymer handelt es sich um ein Ethylen-Copolymer, welches Seitengruppen mit einer hydrolysierbaren Silangruppe aufweist. Außer den genannten Seitengruppen, kann es sich bei den Ethylen-Copolymeren um dieselben handeln, die vorstehend beschrieben wurden, so dass darauf verwiesen wird. Eine hydrolysierbare Silangruppe ist eine Silangruppe, die ein, zwei oder drei hydrolysierbare Reste am Siliciumatom aufweist, wobei bevorzugt drei hydrolysierbare Reste vorliegen. Der hydrolysierbare Rest ist z.B. ein Alkoxy-, Acetoxy-, Ketoximato-, Amido- oder Enoxy-Rest, wobei Alkoxy, insbesondere Methoxy oder Ethoxy, bevorzugt ist. Wie dem Fachmann bekannt, werden die hydrolysierbaren Reste bei Anwesenheit von Wasser oder Feuchtigkeit unter Bildung von Silanolgruppen hydrolysiert. Diese Silanolgruppen sind labil und kondensieren spontan mit anderen Silanolgruppen unter Bildung von Si-O-Si-Brücken, wodurch eine Vernetzung erfolgt, die als Silanvernetzung bezeichnet wird.

Der Einbau der Seitengruppen mit einer hydrolysierbaren Silangruppe in das Ethylen-Copolymer kann auf übliche Weise mithilfe von ethylenisch ungesättigten Monomeren, die eine hydrolysierbare Silangruppe aufweisen, erfolgen. Das ethylenisch ungesättigte Monomer mit einer hydrolysierbaren Silangruppe kann z.B. ein Vinylsilan sein. Bevorzugt sind Vinyltrialkoxysilane wie Vinyltrimethoxysilan und Vinyltriethoxysilan. Das ethylenisch ungesättigte Monomer mit einer hydrolysierbaren Silangruppe kann z.B. als zusätzliches Comonomer bei der Herstellung des Ethylen-Copolymers eingesetzt werden oder es wird auf das Ethylen-Copolymer aufgepropft. Die Verfahren sind dem Fachmann bekannt.

Bevorzugt ist das Aufpfropfen des ethylenisch ungesättigten Monomers mit einer hydrolysierbaren Silangruppe, bevorzugt einem Vinylsilan, auf das Ethylen-Copolymer. Hierfür kann z.B. das ethylenisch ungesättigten Monomer mit einer hydrolysierbaren Silangruppe, bevorzugt ein Vinylsilan, aufgepropft werden, indem es zusammen mit dem Ethylen-Copolymer in Anwesenheit eines Initiators, wie z.B. eines Peroxids, extrudiert wird. Das Aufpfropfen der Seitengruppen mit einer hydrolysierbaren Silangruppe kann dabei in einem gesonderten vorherigen Herstellungsschritt oder gleichzeitig mit der Bildung der Kernschicht durch Extrudieren erfolgen.

Das Ethylen-Copolymer oder das Silan-modifizierte Ethylen-Copolymer der Kernschicht ist z.B. ausgewählt aus Ethylen-$\alpha$-Olefin-Copolymer, Ethylen-Propylen-Copolymer und Ethylen-Vinylacetat-Copolymer, bevorzugt aus Ethylen-$\alpha$-Olefin-Copolymer und Ethylen-Vinylacetat-Copolymer, wobei bei dem Silan-modifizierten Ethylen-Copolymer das Ethylen-Copolymer Seitengruppen mit einer hydrolysierbaren Silangruppe aufweist. Das Ethylen-$\alpha$-Olefin-Copolymer ist dabei bevorzugt Ethylen-Oct-1-en-Copolymer, Ethylen-But-1-en-Copolymer oder Ethylen-Hex-1-en-Copolymer. Das Ethylen-Copolymer oder das Silan-modifizierte Ethylen-Copolymer basieren besonders bevorzugt auf einem Ethylen-Copolymer ausgewählt aus Ethylen-Oct-1-en-Copolymer und Ethylen-Vinylacetat-Copolymer.

In der Kernschicht sind z.B. 40 bis 100 Gew.-% Ethylen-Copolymer oder Silan-modifiziertes Ethylen-Copolymer, bevorzugt 70 bis 100 Gew.-%, bevorzugter 80 bis 100 Gew.-% und besonders bevorzugt 85 bis 100 Gew.-% Ethylen-Copolymer oder Silan-modifiziertes Ethylen-Copolymer, bezogen auf den Kunststoffgehalt der Kernschicht, enthalten, wobei das Ethylen-Copolymer oder das Silan-modifizierte Ethylen-Copolymer bevorzugt ausgewählt ist aus Ethylen-$\alpha$-Olefin-Copolymer oder Ethylen-Vinylacetat-Copolymer, wobei bei dem Silan-modifizierten Ethylen-Copolymer das Ethylen-Copolymer Seitengruppen mit einer hydrolysierbaren Silangruppe aufweist.

Der E-Modul des mindestens einen Ethylen-Copolymers oder Silan-modifizierten Ethylen-Copolymers der Kernschicht des Membranvorprodukts ist z.B. kleiner als 100 MPa, bevorzugt kleiner als 50 MPa. Bevorzugt ist das E-Modul des mindestens einen Ethylen-Copolymers oder Silan-modifizierten Ethylen-Copolymers der Kernschicht des Membranvorprodukts nicht mehr als 20 MPa, bevorzugt nicht mehr als 10 MPa. Der E-Modul kann bestimmt werden gemäss EN ISO 527-3 (Modul im Dehnungsbereich von 0,05 bis 0,25%).

In der Kernschicht des Membranvorprodukts sind, bezogen auf den Kunststoffgehalt der Kernschicht, bevorzugt mehr als 70 Gew.-%, bevorzugter mehr als 80 Gew.-%, besonders bevorzugt mehr als 85 Gew.-% des mindestens einen Ethylen-Copolymers oder Silan-modifizierten Ethylen-Copolymers mit einem E-Modul von kleiner als 20 MPa, bevorzugter von kleiner als 10 MPa, enthalten, wobei das Ethylen-Copolymer oder das Silan-modifizierte Ethylen-Copolymer bevorzugt ausgewählt ist aus Ethylen-$\alpha$-Olefin-Copolymer, Ethylen-Vinylacetat-Copolymer oder Ethylen-Propylen-Copolymer, wobei bei dem Silan-modifizierten Ethylen-Copolymer das Ethylen-Copolymer Seitengruppen mit einer hydrolysierbaren Silangruppe aufweist.

Der Ethylenanteil im Ethylen-Copolymer oder Silan-modifizierten Ethylen-Copolymer kann je nach eingesetzten Comonomeren stark variieren. Der Ethylenanteil kann z.B. im Bereich von 5 bis 95 Gew.-%, bevorzugt 10 bis 85 Gew.%, liegen.

Der Ethylenanteil im Ethylen-Copolymer oder Silan-modifizierten Ethylen-Copolymer mit Vinylacetat oder $\alpha$-Olefinen kann z.B. im Bereich von 40 bis 95 Gew.-%, bevorzugt im Bereich von 45 bis 85 Gew.-%, liegen. Der Ethylenanteil im Ethylen-Copolymer oder Silan-modifizierten Ethylen-Copolymer mit Propylen kann z.B. im Bereich von 3 bis 30 Gew.-%, bevorzugt im Bereich von 10 bis 20 Gew.-%, liegen.

Die Kernschicht des Membranvorprodukts kann gegebenenfalls eine Mischung von zwei oder mehr Typen von vorgängig erwähnten Ethylen-Copolymeren oder Silan-modifizierten Ethylen-Copolymeren, die thermoplastische Elastomere darstellen, umfassen, wobei die Typen z.B. einen unterschiedlichen Schmelzflussindex (MFI) aufweisen. In einer bevorzugten Ausführungsform enthält die Kernschicht des Membranvorprodukts nur ein Ethylen-Copolymer oder Silan-modifiziertes Ethylen-Copolymer.

Sofern die Vernetzung durch UV-Strahlung erfolgen soll, umfasst die Kernschicht des Membranvorprodukts neben dem Ethylen-Copolymer einen Photoinitiator. Photoinitiatoren sind Initiatoren, die bei Bestrahlung mit Licht geeigneter Wellenlänge radikalische oder ionische Polymerisationen (Photopolymerisationen) oder Polykondensationsreaktionen auslösen können. Bei dem Photoinitiator kann es sich um jeden gewöhnlichen Photoinitiator handeln. Naturgemäß wird ein Photoinitiator ausgewählt, der durch die eingesetzte UV-Strahlung aktiviert werden kann. Diese werden auch als UV-Photoinitiator bezeichnet. Der Fachmann kann ohne weiteres einen an das von der jeweils eingesetzten UV-Bestrahlungsvorrichtung erzeugte UV-Bestrahlungsspektrum angepassten Photoinitiator auswählen. Bei dem Photoinitiator handelt es sich bevorzugt um einen radikalischen Photoinitiator. Photoinitiatoren sind im Handel erhältlich, z.B. unter der Handelsbezeichnung Irgacure® von BASF.

Ein geeigneter Photoinitiator ist z.B. ausgewählt aus der Gruppe bestehend aus Azoverbindungen, Peroxiden, Disulfiden, Benzoinethern, Benzilmonoketalen, α-substituierten Acetophenon-Derivaten, wie α,α-Dialkoxyacetophenonen, α-Hydroxyketonen oder α-Aminoketonen, Phenylglyoxylsäureestern, α-Acyloximestern, Acylphosphinoxiden und aromatischen Ketonen, wie Benzophenon- oder Thioxanthon-Derivaten.

Der Photoinitiator kann ein Photoinitiator vom Typ I oder vom Typ II sein, wobei ein Photoinitiator vom Typ II bevorzugt ist. Der Photoinitiator ist bevorzugt ausgewählt aus der Gruppe der H-Abstraktoren. Als Photoinitiator vom Typ I bezeichnet man allgemein Photoinitiatoren, die durch intramolekulare Bindungsspaltung Radikale bilden. Als Photoinitiator vom Typ II bezeichnet man allgemein Photoinitiatoren, die durch intermolekulare Reaktion mit einem Reaktionspartner (Coinitiator) Radikale bilden. Als Reaktionspartner können auch Verbindungen dienen, die in der Reaktionsmischung bereits enthalten sind. Ein H-Abstraktor ist ein Photoinitiator vom Typ II, bei dem durch intermolekulare Wasserstoffübertragung Radikale ausgebildet werden.

Der Photoinitiator wird z.B. in einer Menge von 0,05 bis 3 Gew.-Teilen, bevorzugt 0,4 bis 2 Gew.-Teilen, pro 100 Gew.-Teilen Ethylen-Copolymer zugegeben.

Sofern die Vernetzung durch Silanvernetzung erfolgen soll, umfasst die Kernschicht des Membranvorprodukts neben dem Silan-modifizierten Ethylen-Copolymer gegebenenfalls einen Katalysator, der die Silanvernetzung unterstützen kann. Diese Katalysatoren sind dem Fachmann bekannt. Beispiele für geeignete Katalysatoren sind organische Zn-Verbindungen und organische Ti-Verbindungen in Kombination mit Basen oder starke Basen.

Die Kernschicht des Membranvorprodukts kann ferner gegebenenfalls ein Vernetzungsmittel umfassen. Dies ist insbesondere bevorzugt, wenn die Kernschicht ein Ethylen-Copolymer enthält und über UV-Bestrahlung vernetzt werden soll. Durch die Zugabe eines Vernetzungsmittels kann in der Regel die Vernetzungseffizienz deutlich verbessert werden, wodurch die Bestrahlungszeiten verkürzt werden können. Der Einsatz eines Vernetzungsmittels ist insbesondere bei Einsatz von Ethylen-Copolymeren mit einem α-Olefin als Comonomer zweckmäßig, da bei diesen Ethylen-Copolymeren die Vernetzungseffizienz nur mit Photoinitiator in der Regel relativ gering ist, aber durch Zugabe des Vernetzungsmittels drastisch verbessert werden kann.

Es können ein oder mehrere Vernetzungsmittel verwendet werden. Das Vernetzungsmittel weist z.B. eine Molmasse von nicht mehr als 1000 g/mol auf.

Es können alle üblichen Vernetzungsmittel eingesetzt werden. Das Vernetzungsmittel kann z.B. zwei oder mehr, bevorzugt drei oder mehr reaktive funktionelle Gruppen, z.B. Vinyl- oder Acrylat-Gruppen, aufweisen. Das Vernetzungsmittel weist bevorzugt zwei oder mehr, bevorzugt drei oder mehr, besonders bevorzugt drei Gruppen ausgewählt aus Vinylgruppen, Allylgruppen, Acrylatgruppen oder Methacrylatgruppen auf.

Konkrete Beispiele für Vernetzungsmittel sind Triallylcyanurat (TAC), Triallylisocyanurat (TAIC), Trimethylolpropantriacrylat (TMA), Trimethylolpropantrimethacrylat (TMPTA), 1,2-Polybutadien, Pentaerithritoltriacrylat, Pentaerithritoltrimethacrylat, Pentaerithritoltetraacrylat, Pentaerithritoltetramethacrylat, Dipentaerithritolpentaacrylat, Dipentaerithritolpentamethacrylat, Ditrimethylolpropantetraacrylat, Ditrimethylolpropantetramethacrylat oder Polybutadien.

Das Vernetzungsmittel kann auf eine Trägersubstanz, wie z.B. Siliciumdioxid, aufgezogen sein. Die Trägersubstanz kann zur Stabilisierung und/oder zur Verbesserung der Transportierbarkeit oder Dosierbarkeit zweckmäßig sein.

Das Vernetzungsmittel wird z.B. in einer Menge von 0 bis 10 Gew.-Teilen, bevorzugt 0,4 bis 2 Gew.-Teilen, pro 100 Gew.-Teilen Ethylen-Copolymer zugegeben. Wenn Vernetzungsmittel eingesetzt wird, wird es z.B. in einer Menge von nicht mehr als 10 Gew.-Teilen, bevorzugt nicht mehr als 2 Gew.-Teilen, pro 100 Gew.-Teilen Ethylen-Copolymer zugegeben. Bei diesen Mengenangaben sind gegebenenfalls in dem Vernetzungsmittel enthaltene Trägersubstanzen nicht berücksichtigt.

Die Deckschicht und die Rückseitenschicht unterscheiden sich bezüglich der Zusammensetzung im Membranvorprodukt und in der Abdichtungsmembran nicht, außer dass die Abmessungen sich unterscheiden können, z.B. infolge einer Kalanderbehandlung. Die folgenden Angaben zur Deckschicht und Rückseitenschicht beziehen sich daher sowohl auf das Membranvorprodukt als auch auf die Abdichtungsmembran, sofern nicht anders angegeben.

Die Deckschicht und die Rückseitenschicht sind thermoplastisch, d.h. es handelt sich um thermoplastische Kunststoffschichten. Deckschicht und Rückseitenschicht können bezüglich eingesetzter Polymere und/oder optionaler Additive gleich sein oder sich unterscheiden.

Die Deckschicht und die Rückseitenschicht enthalten jeweils mindestens ein Ethylen-Copolymer und/oder mindestens ein Ethylen-Homopolymer. Das Ethylen-Copolymer und das Ethylen-Homopolymer sind insbesondere thermoplastische Polymere oder thermoplastische Elastomere. Daher sind Deckschicht und Rückseitenschicht schweißbare Schichten. Das ist vorteilhaft, da die Rückseitenschicht durch Verschweißen, z.B. mittels Heißluft, an ein Substrat fixiert werden kann. Eine Verklebung ist nicht erforderlich.

Bei dem Ethylen-Copolymer kann es sich um die vorstehend für die Kernschicht genannten Ethylen-Copolymere handeln. Es wird auf die dort genannten Beispiele verwiesen. Bei dem Ethylen-Homopolymer kann es sich um die üblichen Polyethylene handeln. Beispiele sind Polyethylen hoher Dichte (HDPE) und Polyethylen geringer Dichte (LDPE). Die Deckschicht und/oder die Rückseitenschicht enthalten bevorzugt mindestens ein Ethylen-Copolymer, insbesondere Ethylen-$\alpha$-Olefin, wie z.B. Ethylen-1-Octen.

In einer besonders bevorzugten Ausführungsform enthalten die Deckschicht und/oder die Rückseitenschicht ein Ethylen-Copolymer, welches das gleiche Comonomer wie das Ethylen-Copolymer oder das Silan-modifizierte Ethylen-Copolymer der Kernschicht enthält, wobei der Gehalt an Comonomer im Ethylen-Copolymer oder Silan-modifizierten Ethylen-Copolymer in der Kernschicht bevorzugt gleich oder größer ist als der Gehalt an Comonomer im Ethylen-Copolymer in der Deckschicht und/oder der Rückseitenschicht. Auf diese Weise kann die Kompatibiltät zwischen Kernschicht und Deckschicht bzw. Rückseitenschicht erhöht werden, wodurch eine bessere Bindung zwischen den Schichten ermöglicht wird. Durch die Variation des Comonomergehalts kann z.B. die Flexibilität der einzelnen Schichten gezielt eingestellt werden.

Wenn bei den äußeren Schichten (Deckschicht und Rückseitenschicht) ein Ethylen-Copolymer verwendet wird, kann durch einen relativ niedrigen Gehalt an Comonomer wie z.B. Octen im Ethylen-Copolymer ein höheres E-Modul und eine höhere Schmelztemperatur eingestellt werden.

Bevorzugt liegt das E-Modul des mindestens einen Ethylen-Copolymers oder Ethylen-Homopolymers der Deckschicht und/oder der Rückseitenschicht im Bereich von 30 bis 120 MPa, bevorzugt von 80 bis 120 MPa. Der E-Modul kann bestimmt werden gemäss EN ISO 527-3.

Die Deckschicht, die Rückseitenschicht und die Kernschicht können jeweils gegebenenfalls ein oder mehrere Additive enthalten kann, die für Kunststoffschichten üblich ist. Beispiele für geeignete Additive sind Füllstoffe, Stabilisatoren, Verarbeitungshilfsmittel, Weichmacher, Gleitmittel, Biozide, Flammschutzmittel, Pigmente und Farbstoffe. Beispiele für geeignete Flammschutzmittel sind z.B. anorganische Flammschutzmittel wie z.B. Aluminiumhydroxid (ATH). Beispiele für Stabilisatoren sind Antioxidationsmittel und UV-Stabilisatoren wie $TiO_2$ und sterisch gehinderte Amin-Lichtstabilisatoren (HALS).

Es versteht sich, dass der Einsatz der Additive auch von der Funktion der einzelnen Schichten abhängt. So ist es bei Bedarf z.B. sinnvoll, dass UV-Stabilisatoren nur in der Deckschicht enthalten sind, sofern eine UV-Vernetzung durchgeführt werden soll. In diesem Fall sollte die Rückseitenschicht und die Kernschicht keine UV-Stabilisatoren enthalten oder allenfalls in geringen Mengen. Die UV-Bestrahlung erfolgt dann bevorzugt durch die Rückseitenschicht.

Die Deckschicht, die Rückseitenschicht und die Kernschicht können jeweils gegebenenfalls auch andere als die genannten Polymere enthalten. Es ist aber bevorzugt, dass sie jeweils weniger als 15 Gew.-%, bevorzugter weniger als 10 Gew.-%, an diesen anderen Polymeren, bezogen auf den Kunststoffgehalt der jeweiligen Schicht, enthalten.

Das Membranvorprodukt bzw. die Abdichtungsmembran kann gegebenenfalls ferner eine Barriereschicht aufweisen, die auf der Seite der Rückseitenschicht angeordnet ist, die der zur Kernschicht weisenden Seite der Rückseitenschicht entgegengesetzt ist, so dass sich die Reihenfolge Barriereschicht, Rückseitenschicht, Kernschicht, Deckschicht ergibt. Auf der Barriereschicht kann ferner noch eine Klebschicht angeordnet werden wie nachstehend ausgeführt.

Die optionale Barriereschicht umfasst z.B. mindestens ein Polymer ausgewählt aus Ethylen-Vinylalkohol-Copolymer (EVOH), Polyamid (PA) oder Polyester. Beispiele für Polyamide sind PA 66 aus Hexamethylendiamin und Adipinsäure, PA 610 aus Hexamethylendiamin und Sebacinsäure, PA 6 aus Caprolactam oder Aminoundecansäure, PA 11 aus Undecanlactam oder PA 12 aus Laurinlactam oder Aminododecansäure. Beispiele für Polyester sind Polyethylenterephthalat (PET), Polybutylenterephthalat (PBT) und Polyethylennaphthalat (PEN). Die Barriereschicht umfasst bevorzugt EVOH oder PA.

Wenn eine Barriereschicht eingebaut wird, wird bevorzugt eine Barrierefolie verwendet, die die Rückseitenschicht und die Barriereschicht umfasst. Die Barrierefolie wird dann in dem Membranvorprodukt so angeordnet, dass die Barriereschicht sich auf der Seite der Rückseitenschicht befindet, die der zur Kernschicht weisenden Seite der Rückseitenschicht entgegengesetzt ist. Solche Barrierefolien sind im Handel erhältlich und können noch weitere Schichten enthalten. Die Barrierefolie ist bevorzugt eine Blasfolie, insbesondere eine mehrschichtige Blasfolie, die noch weitere Schichten enthält.

Eine Barriereschicht ist dann zweckmäßig, wenn die Abdichtungsmembran ferner eine Klebschicht umfasst wie nachstehend ausgeführt oder die Abdichtungsmembran mit einem Klebstoff auf das abzudichtende Substrat fixiert werden soll.

Das Membranvorprodukt bzw. die Abdichtungsmembran kann gegebenenfalls ferner eine Klebschicht aufweisen. Die Klebschicht ist insbesondere auf der Seite der Rückseitenschicht angeordnet, die die der zur Kernschicht weisenden Seite der Rückseitenschicht entgegengesetzt ist, wobei in diesem Fall bevorzugt auch eine Barriereschicht wie vorstehend ausgeführt zwischen Rückseitenschicht und Klebschicht angeordnet wird. Die Klebschicht kann z.B. einen Bitumen-Klebstoff, einen Schmelzkleber oder eine Kautschuk-Klebemasse enthalten. Der Klebstoff ist bevorzugt ein Haftklebstoff.

Das Membranvorprodukt bzw. die Abdichtungsmembran kann gegebenenfalls ferner ein Trägerelement aufweisen. Das Trägerelement trägt zur Formstabilität bei. Sie kann an eine der Schichten, insbesondere der Kernschicht, des Membranvorprodukts bzw. der Abdichtungsmembran angebunden oder in es eingebettet sein. Das Trägerelement kann aus Fasern gebildet oder ein Gitter sein, wobei Trägerelemente aus Fasern bevorzugt sind. Es können organische, anorganische oder synthetische Fasern sein. Beispiele für organische Fasern sind Zellulose-, Baumwoll- und Proteinfasern. Beispiele für anorganische Fasern sind Glasfasern. Beispiele für synthetische Fasern sind Fasern aus Polyester oder aus einem Homo- oder Copolymeren von Ethylen und/oder Propylen und aus Viskose.

Das Trägerelement aus Fasern ist z.B. ein Gewebe, Gelege oder Gewirke, wobei ein Filz, Vlies oder Gittergelege, z.B. aus Glas oder PET, bevorzugt sind. Vorzugsweise ist das Trägerelement in die Kernschicht eingebettet. Das Trägerelement weist vorteilhaft Zwischenräume auf, welche zumindest teilweise vom Material der Kernschicht durchsetzt sind.

Die Bildung des Membranvorprodukts kann nach den bekannten Verfahren für mehrschichtige Abdichtungsmembranen bzw. mehrschichtigen Folien durchgeführt werden. Die jeweiligen Schichten können z.B. separat oder teilweise oder vollständig gemeinsam nach den üblichen Verfahren hergestellt werden, z.B. Formpressen, Gießen, Kalandrieren oder Extrudieren oder Kombinationen davon. In einer bevorzugten Ausführungsform erfolgt das Formen einer Schmelze durch ein Extrusionsverfahren, gegebenenfalls mit nachgeschaltetem Kalander bzw. Glättwerk. Folien, die für die jeweiligen Schichten, insbesondere die Rückseitenschicht oder die Deckschicht, geeignet sind, sind auch im Handel erhältlich.

Der Verbindung der jeweiligen Schichten kann ebenfalls auf übliche, dem Fachmann bekannte Weise erfolgen, z.B. durch Aufextrudieren, Coextrudieren, Kaschieren oder Auflaminieren.

In einer bevorzugten Ausführungsform werden zur Bildung des Membranvorproduktes die Deckschicht und die Kernschicht im Coextrusionsverfahren auf eine die Rückseitenschicht bildende oder umfassende Folie aufextrudiert. Alternativ kann die Rückseitenschicht und die Kernschicht im Coextrusionsverfahren auf eine die Deckschicht bildende oder umfassende Folie aufextrudiert werden.

Auf diese Weise lässt sich auf einfache Weise in einem Arbeitsgang auf üblichen Vorrichtungen das dreischichtige Vorprodukt bilden. Die Folie mit der aufextrudierten Schmelze kann dann im Glättwerk weiter behandelt werden.

Bei der die Deckschicht oder bevorzugt die Rückseitenschicht bildenden oder umfassenden Folie, die bevorzugt eine Blasfolie ist, kann es sich z.B. um eine PE-Folie, eine PE-Copolymer-Folie oder eine obig genannte Barrierefolie aus Rückseitenschicht und Barriereschicht, z.B. eine PE-EVOH-Barrierefolie, handeln.

Es kann auf die Rückseitenschicht oder, falls auch eine Barriereschicht vorhanden ist, auf die Barriereschicht mit einem Klebstoff, insbesondere einem bituminösen Klebstoff, eine Klebschicht aufgetragen werden. Die Klebschicht kann vor oder bevorzugt nach der Vernetzung der Kernschicht aufgebracht werden. Insbesondere bei der UV-Vernetzung wird die Klebschicht, falls verwendet, bevorzugt nach der Vernetzung aufgebracht.

Ein bevorzugtes Verfahren zur Herstellung eines Membranvorprodukts, das ein in die Kernschicht eingebettetes Trägerelement umfasst, ist wie folgt: Zur Bildung des Membranvorproduktes werden in einem ersten Schritt die Deckschicht und ein Teil der Kernschicht im Coextrusionsverfahren auf eine Seite eines Trägerelements aufextrudiert; anschließend wird in einem zweiten Schritt auf die andere Seite des Trägerelements der restliche Teil der Kernschicht und die Rückseitenschicht aufgebracht, vorzugsweise in einem Coextrusionsverfahren. Es ist aber auch möglich, zunächst den restlichen Teil der Kernschicht aufzubringen und anschließend die Rückseitenschicht aufzulaminieren. Alternativ ist es bei diesem Verfahren genauso möglich, im ersten Schritt statt der Deckschicht die Rückseitenschicht mit einem Teil der Kernschicht aufzuextrudieren und entsprechend im zweiten Schritt statt der Rückseitenschicht die Deckschicht einzubauen.

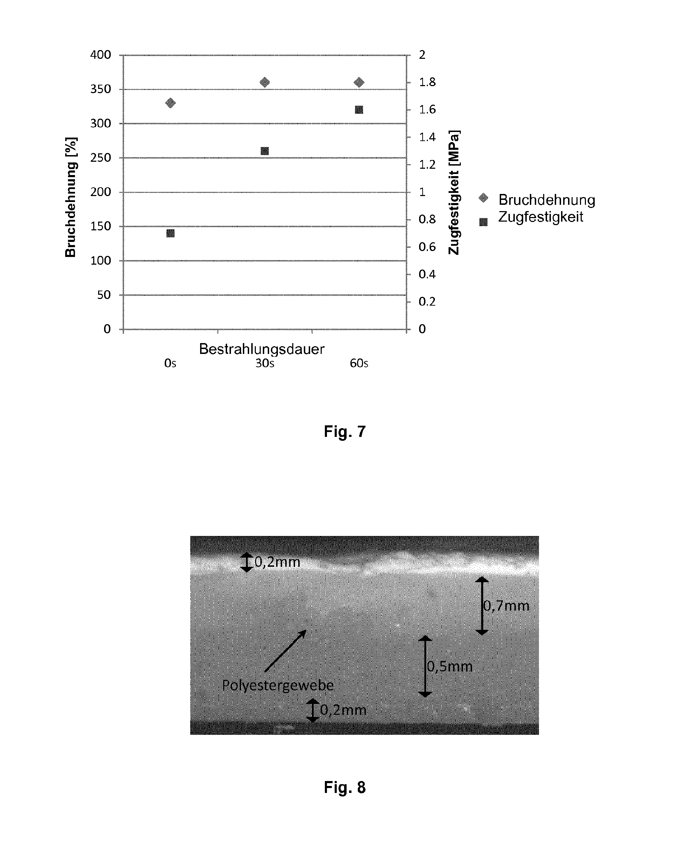

Der Teil der Kernschicht bezieht sich dabei auf einen Teil der Kernschichtdicke in dem Membranvorprodukt. Bevorzugt werden im ersten und im zweiten Schritt jeweils etwa 50% der Kernschichtdicke aufgebracht. Ein solcher Aufbau ist z.B. in Fig. 8 ersichtlich.

Alternativ kann Deckschicht als vorfabrizierte Folie vorgelegt und anschließend mit der Kernschicht beschichtet werden. Die Rückseitenschicht kann dann mit üblichen Verfahren auf die Kernschicht aufgebracht werden. Bei einer weiteren Alternative kann die Rückseitenschicht mittels eines Kaschierschrittes auf die bereits extrudierte Kernschicht auflaminiert werden. Die Deckschicht kann dann mit üblichen Verfahren auf die Kernschicht aufgebracht werden.

Nach der Bildung des Vorproduktes erfolgt die Vernetzung (i) des mindestens einen Ethylen-Copolymers in der Kernschicht mittels UV-Bestrahlung unter Bildung eines UV-vernetzten Ethylen-Copolymers oder (ii) des mindestens einen Silan-modifizierten Ethylen-Copolymers in der Kernschicht mittels Feuchtigkeit unter Bildung eines Silan-vernetzten Ethylen-Copolymers.

Bei der Variante (i) erfolgt die UV-Bestrahlung der Kernschicht durch die Deckschicht oder bevorzugt durch die Rückseitenschicht. Das Ethylen-Copolymer liegt anschließend in UV-vernetzter Form vor, d.h. die Copolymer-Ketten sind durch UV-Bestrahlung chemisch vernetzt. Die Vernetzung erfolgt also über kovalente Bindungen. Die UV-Vernetzung von Polyolefinen ist bekannt.

UV-Strahlung bedeutet, wie üblich, Ultraviolett-Strahlung. Zur UV-Bestrahlung können die in der Technik bekannten UV-Bestrahlungsvorrichtungen mit einer oder mehreren UV-Lampen eingesetzt werden. In der Praxis gut geeignet sind z.B. UV-Bogenlampen. Die Intensität von UV-Lampen für Anlagen im kontinuierlichen Betrieb hängt z.B.

u.a. von der Leistung der Lampe selbst, dem Reflektordesign, dem Abstand des Materials von der Lampe und der Bestrahlungsdauer ab.

Beispiele für handelsübliche UV-Bestrahlungsvorrichtungen sind z.B. UVASPOT® von Dr. Hönle AG, die mit Leistungsstufen von 400 W, 1000 W und 2000 W erhältlich sind. Der Hönle UVASPOT® mit 400 W F-Lampe erzeugt z.B. eine UV-Intensität von ca. 135 mW/cm$^2$ (UVA) direkt unter dem Lampenschirm. Nach 30 s Belichtung würde somit eine Energie von 30 * 135 mWs/cm$^2$ = ca. 4000 mJ/cm$^2$ ins Material eingebracht. Die UV-Intensität nimmt mit zunehmendem Abstand vom Lampenschirm naturgemäß ab, was zu berücksichtigen ist.

Die UV-Bestrahlung erfolgt vorzugsweise so, dass die in das Material eingetragene UV-Energie mindestens 1000 mJ/cm$^2$, bevorzugter mindestens 2000 mJ/cm$^2$ und besonders bevorzugt mindestens 3000 mJ/cm$^2$ beträgt. Die eingetragene UV-Energie kann z.B. im Bereich von 1000 bis 15000 mJ/cm$^2$, bevorzugt von 2000 bis 10000 mJ/cm$^2$, bevorzugter von 3000 bis 9000 mJ/cm$^2$, liegen.

Wenn bei dem Verfahren die Bildung des Vorprodukts durch Extrusion gegebenenfalls mit nachgeschaltetem Kalandrieren bzw. Glättwerk erfolgt, kann die UV-Bestrahlungsvorrichtung an der Extrusionsanlage angeordnet werden, so dass die UV-Bestrahlung des flächenförmigen Materials z.B. unmittelbar nach Austritt aus der Extruderdüse oder zu einem späteren Zeitpunkt, z.B. nach dem Glättwerk, erfolgt. Die UV-Bestrahlung erfolgt bevorzugt nach der endgültigen Formgebung der kompletten Membranvorstufe.

Bei der Variante (ii) erfolgt eine Silanvernetzung, bei der das Silan-modifizierte Ethylen-Copolymer durch Feuchtigkeit, z.B. Luftfeuchtigkeit, vernetzt wird. Die Feuchtigkeitsbehandlung kann in einem Wasserbad oder Dampfbad durchgeführt werden. Die in der Umgebungsatmosphäre vorhandene Luftfeuchtigkeit kann für die Vernetzung ebenfalls ausreichen. Wie bereits ausgeführt bewirkt die Feuchtigkeit eine Reaktion der hydrolysierbaren Silangruppen unter Bildung von Silanvernetzung.

Wenn bei dem Verfahren die Bildung des Vorprodukts durch Extrusion gegebenenfalls mit nachgeschaltetem Kalandrieren bzw. Glättwerk erfolgt, kann z.B. ein Wasserbad oder Dampfbad an der Extrusionsanlage angeordnet werden, so dass die Feuchtigkeitsbehandlung z.B. unmittelbar nach Austritt aus der Extruderdüse oder zu einem späteren Zeitpunkt, z.B. nach dem Glättwerk, erfolgt. Die Feuchtigkeitsbehandlung erfolgt bevorzugt nach der endgültigen Formgebung der kompletten Membranvorstufe. Wie gesagt ist eine solche Behandlung mit Wasserbad oder Dampfbad nicht eigens erforderlich, da die Silanvernetzung auch bereits durch die Luftfeuchtigkeit erfolgt.

Die UV-Vernetzung und die Silanvernetzung können z.B. bei Temperaturen von 10 bis 100°C durchgeführt werden, z.B. bei einer Umgebungstemperatur im Bereich von 15 bis 40°C.

Die Vernetzungsdichte des UV-vernetzten Ethylen-Copolymers oder des Silan-vernetzten Ethylen-Copolymers in der Kernschicht kann z.B. über den Gelanteil bestimmt werden. Der Gelanteil kann bestimmt werden gemäß ASTM 2765, Verfahren A. Nähere Angaben sind im experimentellen Teil angeführt. Der Gelanteil in der Kernschicht beträgt z.B. mindestens 55 Gew.-%, bevorzugt mindestens 70 Gew.-%, bevorzugter mindestens 75 Gew.-% und besonders bevorzugt mindestens 80 Gew.-%. Der Gelanteil kann theoretisch bis zu 100 Gew.-% betragen.

Die Erfindung betrifft auch eine Abdichtungsmembran umfassend in dieser Reihenfolge eine thermoplastische Rückseitenschicht, die mindestens ein Ethylen-Copolymer und/oder mindestens ein Ethylen-Homopolymer enthält; eine Kernschicht, die mindestens ein UV-vernetztes Ethylen-Copolymer oder ein feuchtigkeitsvernetztes Silan-modifiziertes Ethylen-Copolymer umfasst, wobei das Silan-modifizierte Ethylen-Copolymer ein Ethylen-Copolymer ist, welches Seitengruppen mit einer hydrolysierbaren Silangruppe aufweist, und wobei das Ethylen-Copolymer und das Silan-modifizierte Ethylen-Copolymer ein thermoplastisches Elastomer sind; und eine thermoplastische Deckschicht, die mindestens ein Ethylen-Copolymer und/oder mindestens ein Ethylen-Homopolymer enthält.

Die Abdichtungsmembran ist nach dem erfindungsgemäßen Verfahren erhältlich. Alle vorstehenden Angaben gelten entsprechend für die Abdichtungsmembran. So kann die Abdichtungsmembran z.B. ein Trägerelement enthalten. Die Abdichtungsmembran kann ferner eine Barriereschicht umfassen, die sich auf der Seite der Rückseitenschicht befindet, die der zur Kernschicht weisenden Seite der Rückseitenschicht entgegengesetzt ist. Gegebenenfalls kann die Abdichtungsmembran eine oder mehrere weitere Schichten umfassen, z.B. eine Klebschicht auf der Rückseitenschicht oder bevorzugt auf der Barriereschicht, falls vorhanden.

Die Kernschicht der Abdichtungsmembran kann z.B. eine Schichtdicke von 0,1 bis 5 mm, bevorzugt 0,5 bis 4 mm und bevorzugter von 0,8 bis 2 mm aufweisen. Die Rückseitenschicht und/oder die Deckschicht der Abdichtungsmembran können jeweils z.B. eine Schichtdicke im Bereich von 0,04 bis 1 mm, bevorzugt von 0,05 bis 0,7 mm und bevorzugter von 0,08 bis 0,6 mm aufweisen.

Bei Vorliegen einer relativ großen Dicke der äußeren Schichten ist die gesamte Abdichtungsmembran relativ steif. Dies kann durch die sogenannte "Sandwich"-Theorie erklärt werden. Bei einem dreischichtigen Aufbau mit einer Kernschichtdicke von 2h und einem E-Modul E$^c$ und eine Schichtdicke der äußeren Schichten (Deckschicht und Rückseitenschicht) f und einem zugehörigen E-Modul von jeweils E$^f$ berechnet sich die Biegesteifigkeit nach folgender Formel:

$$D = \frac{2}{3}E^f f^3 + \frac{2}{3}E^c h^3 + 2E^f fh(f + h)$$

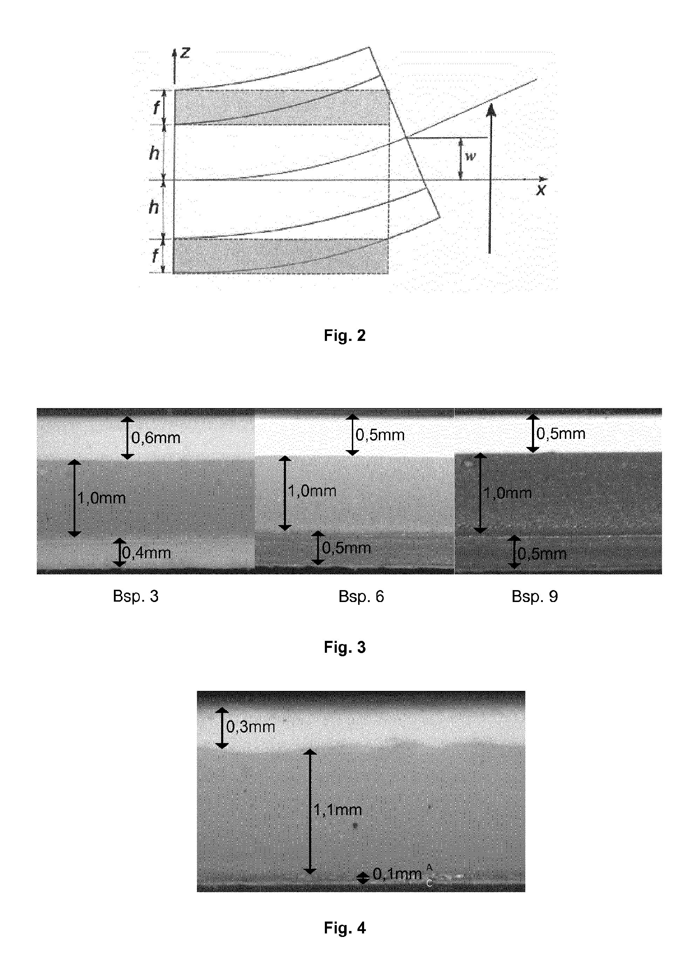

Dadurch wird ersichtlich, dass prinzipiell relativ steife äußere Schichten in Kombination mit einer sehr flexiblen Kernschicht trotzdem zu einer relativ flexiblen mehrschichtigen Abdichtungsmembran führen können, solange die äußeren Schichten vergleichsweise dünn sind. Figur 2 zeigt eine Darstellung zur theoretischen Berechnung der Biegesteifigkeit.

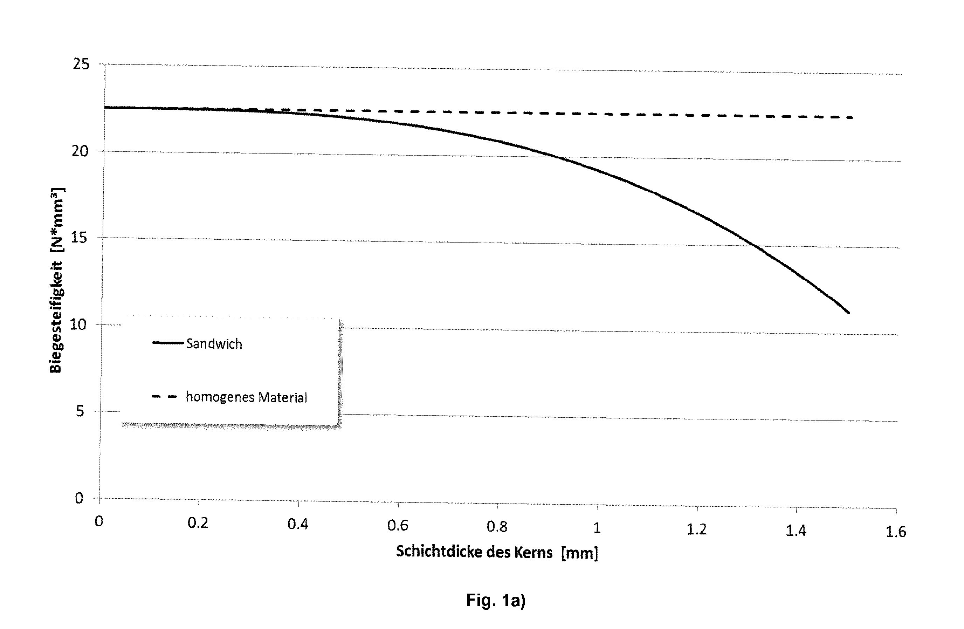

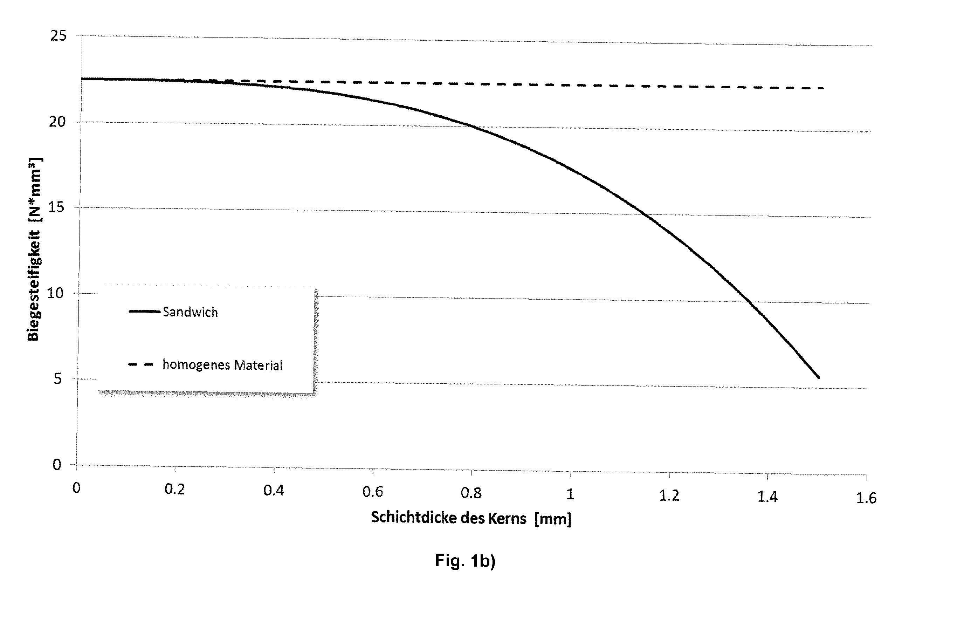

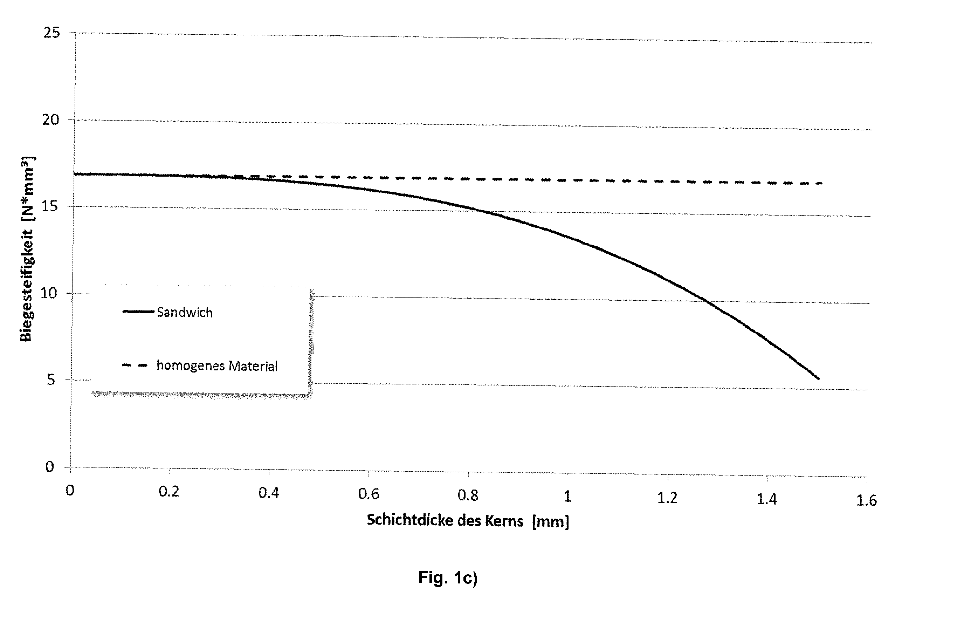

Berechnungen zur Biegesteifigkeit von symmetrisch aufgebauten Dreischichtmembranen aus Kernschicht und zwei Aussenschichten sind in den Fig. 1 a)-c) gezeigt. Ausgehend von einer Gesamtschichtdicke der Abdichtungsmembran von jeweils 1,5 mm wurde geprüft, wie stark die Biegesteifigkeit als Funktion der Kerndicke und den E-Modulen des Kerns und der Aussenschichten sinkt. Als Referenz diente eine homogen aufgebaute Membran mit einem E-Modul von 80 MPa. Folgende E-Module wurden gewählt:

Fig. 1a)     Kernschicht: E-Modul = 40 MPa; Aussenschichten: E-Modul = 80 MPa
Fig. 1b)     Kernschicht: E-Modul = 20 MPa; Aussenschichten: E-Modul = 80 MPa
Fig. 1c)     Kernschicht: E-Modul = 20 MPa; Aussenschichten: E-Modul = 60 MPa

Die Berechnungen zeigen, wie stark die Biegesteifigkeit mit einem tiefen E-Modul und hoher Kernschichtdicke gesenkt werden kann. Durch einen noch tieferen E-Modul der Aussenschichten (Deckschicht und Rückseitenschicht) kann die Biegesteifigkeit auch bei nicht extrem dünnen Deckschichten noch weiter optimiert werden, wie aus Fig. 1c) ersichtlich.

Die Abdichtungsmembran wird z.B. als vorgefertigte Bahn verwendet, insbesondere in Form einer Rolle. Weiter kann die Abdichtungsmembran auch in Form von flächigen Körpern vorliegen und verwendet werden.

Die erfindungsgemäße Abdichtungsmembran eignet sich zum Abdichten eines Substrats, das Teil eines Bauwerks des Hoch- oder Tiefbaus ist. Die Abdichtungsmembran eignet sich insbesondere zum Abdichten eines Bodens oder eines Dachs. Solche Membranen werden auch als Waterproofing-Membranen und Roofing-Membranen bezeichnet.

Das Material des Substrats, welches abzudichten ist, kann z.B. Holz, Metall, eine Metalllegierung, ein mineralisches Bindemittel wie Beton, Estrich, Mörtel oder Gips, Kunststoff oder Wärmedämmmittel wie geschäumtes Polyurethan, Mineralwolle oder geschäumtes Glas (Foamglas) sein. Besonders bevorzugt ist das Material Beton. Das Substrat, z.B. das Betonsubstrat, kann vorbehandelt sein, z.B. mit einem Primer.

**Beispiele**

Folgende Handelsprodukte bzw. Verbindungen wurden für die Versuche verwendet:

| Queo®0203 | Borealis | Ethylen-1-Octen-Copolymer | Octen-Gehalt: 23 Gew.-% |
|---|---|---|---|
| Queo® 0210 | Borealis | Ethylen-1-Octen-Copolymer | Octen-Gehalt: 23 Gew.-% |
| Engage® 8137 | Dow | Ethylen-1-Octen-Copolymer | Octen-Gehalt: 41 Gew.-% |
| Engage® 8200 | Dow | Ethylen-1-Octen-Copolymer | Octen-Gehalt: 39 Gew.-% |
| Engage® 8842 | Dow | Ethylen-1-Octen-Copolymer | Octen-Gehalt: 47 Gew.-% |
| Infuse® 9107 | Dow | Olefin-Blockcopolymer (Ethylen-1-Octen Blockcopolymer) | |
| Irgacure® BP | BASF | 2,2-Dimethoxy-1,2-diphenylethan-1-on | Photoinitiator Typ I, unimolekulare Spaltung |
| Actigran® 70 | Kettlitz | Trimethylolpropantrimethacrylat (TMPTA) | Vernetzungsmittel, 70 Gew.-% auf pyrogenem $SiO_2$ |
| HALS | | sterisch gehindertes Amin wie 2,2,6,6-Tetramethylpiperidin | Lichtstabilisator |
| $TiO_2$ | | $TiO_2$ | UV-Schutzmittel |
| ATH | | Aluminiumhydroxid | Flammschutzmittel |
| VS | | | Verarbeitungsstabilisator |

**Beispiele 1 bis 9**

Zur Herstellung von Abdichtungsmembranen wurden Schichten mit Zusammensetzungen gemäß Tabellen 1 und 2 eingesetzt, wobei die Tabellen ferner den E-Modul der jeweiligen Schichten (bestimmt gemäss ISO 527-3) angeben:

Tabelle 1. Zusammensetzung Deckschicht (DS) und Rückseitenschichten (RS1 / RS2)

|  | DS | RS1 | RS2 |
|---|---|---|---|
| Queo 0203 [Gew.Teile] | 100 | 100 | 100 |
| ATH [Gew.Teile] | 50 | 25 | - |
| $TiO_2$ [Gew.Teile] | 6 | - | - |
| HALS [Gew.Teile] | 1 | 0,3 | 0,3 |
| VS [Gew.Teile] | 0,1 | 0,1 | 0,1 |
| E-Modul [MPa] | 83 | 64 | 53 |

Tabelle 2. Zusammensetzung Kernschichten (KS1-KS6)

|  | KS1 | KS2 | KS3 | KS4 | KS5 | KS6 |
|---|---|---|---|---|---|---|
| Queo 0203 [Gew.Teile] | 100 |  |  | 100 |  |  |
| Engage 8200 [Gew.Teile] |  | 100 |  |  | 100 |  |
| Engage 8842 [Gew.Teile] |  |  | 100 |  |  | 100 |
| ATH [Gew.Teile] | 25 | 25 | 25 |  |  |  |
| Actigran 70 [Gew.Teile]* | 1 | 1 | 1 | 1 | 1 | 1 |
| Irgacure BP [Gew.Teile] | 1 | 1 | 1 | 1 | 1 | 1 |
| VS [Gew.Teile] |  |  |  |  |  |  |
| E-Modul [MPa] | 64 | n.b. | 3 | 53 | n.b. | 3 |
| n.b. = nicht bestimmt <br> * Mengenangabe ohne $SiO_2$-Anteil | | | | | | |

Herstellung Kernschicht

Photoinitiator, Vernetzungsmittel und Flammschutzmittel, sofern eingesetzt, wurden mittels eines Innenmischers (Brabender) bei einer Schmelztemperatur von 110°C in das Copolymer eingemischt. Die Verweilzeit der vollständigen Mischung betrug 3 min. Platten wurden daraus mit einer Heißpresse bei 110°C hergestellt.

Herstellung Rückseiten- und Deckschichten

Die Rückseiten- und Deckschichten wurden in analoger Weise wie die Kernschicht hergestellt.

Bildung Membranvorstufe

Ein dreischichtiger Verbund wurde jeweils aus den in Tabelle 3 angegebenen Schichten mithilfe eines Walzenverfahrens mit anschließendem Plattenpressverfahren hergestellt, wobei jeweils die Kernschicht zwischen der Rückseitenschicht auf der Deckschicht angeordnet wurde. Die Kernschicht wies jeweils eine Dicke von etwa 1 mm auf. Die Rückseiten- und Deckschichten wiesen jeweils eine Dicke von etwa 0,5 mm auf.

UV-Bestrahlung

Eine UV-Bestrahlung der Kernschicht der Membranvorstufe erfolgte anschließend durch die Rückseitenschicht unter Verwendung eines Flächenstrahlers UVASPOT® von Dr. Hönle AG, der mit einer UV 400 W F Lampe (UV-Mitteldruck-Hg-Dampflampe, Fedotiert) ausgerüstet war. Die Bestrahlungsintensität bei 310 und 340 nm betrug 8,74 bzw. 3,51 W/m$^2$/nm. Die Bestrahlungsdauer war ca. 60 s (entspricht eingetragener Energie von ca. 8000 mJ/cm$^2$). Auf diese Weise wurden die Abdichtungsmembranen mit UV-vernetzten Kernschichten gemäß den Beispielen 1 bis 9 hergestellt.

Bestimmung Gelanteil

Der Gelanteil der Kernschicht der hergestellten Abdichtungsmembranen wurde analog der Norm ASTM D 2765, Verfahren A, bestimmt. Dafür wurden 0,3 g des belichteten und grob gemahlenen Materials in einem Beutel aus Nylon-Gewebe (Sefar Nitex® 03-100/32, Maschenweite: 100 mesh) gepackt und sodann während 48 h in einen

Überschuss (1l) von Toluol bei 95°C getaucht. Danach wurde der Beutel mit Toluol gespült. Der im Beutel zurückgehaltene (gequollene) Anteil wurde im Vakuumschrank bei 50°C für 24 h getrocknet und anschließend zurückgewogen. Der Anteil der zurückgehaltenen Masse entspricht dem Gelanteil. Es wurden zwei Versuche durchgeführt und der Mittelwert gebildet.

Die Gelanteile der Beispiele 1 bis 9 sind ebenfalls in Tabelle 3 wiedergegeben. In den Vergleichsversuchen wurden die in den Beispielen verwendeten Kernschichten ohne Deck- und Rückseitenschicht auf die gleiche Weise mit der UV-Lampe bestrahlt und der Gelanteil bestimmt. Es zeigten sich keine signifikanten Unterschiede zu den Gelanteilen in den dreischichtigen Membranen, was zeigt, dass die UV-Vernetzung durch eine Rückseitenschicht möglich ist.

Fig. 3 zeigt Querschnitte der Abdichtungsmembranen gemäß der Beispiele 3, 6 und 9.

Tabelle 3

| Beispiel | 1 | 2 | 3 | 4 | 5 | 6 | 7 | 8 | 9 |
|---|---|---|---|---|---|---|---|---|---|
| Deckschicht | DS | DS | DS | DS | DS | DS | DS | DS | DS |
| Kernschicht | KS1 | KS2 | KS3 | KS1 | KS2 | KS3 | KS4 | KS5 | KS6 |
| Rückseitenschicht | RS1 | RS1 | RS1 | RS2 | RS2 | RS2 | RS2 | RS2 | RS2 |
| Gelanteil Kernschicht [Gew.-%] | 43 | 70 | 90 | 52 | n.b. | 98 | 35 | n.b. | 77 |
| n.b. = nicht bestimmt | | | | | | | | | |

**Beispiel 10**

Die Zusammensetzung der in Beispiel 10 eingesetzten Deckschicht und Kernschicht ist in Tabelle 4 wiedergegeben.

Tabelle 4. Zusammensetzung Kernschicht und Deckschicht

| | Deckschicht | Kernschicht |
|---|---|---|
| Queo 0203 [Gew.Teile] | 50 | |
| Infuse 9107 [Gew.Teile] | 50 | |
| .Engage 8842 [Gew.Teile] | | 100 |
| ATH [Gew.Teile] | 50 | 25 |
| TiO$_2$ [Gew.Teile] | 6 | |
| HALS [Gew.Teile] | 1 | |
| VS [Gew.Teile] | 0,1 | |
| Actigran 70 [Gew.Teile]* | | 1 |
| Irgacure BP [Gew.Teile] | | 1 |
| * Mengenangabe ohne SiO$_2$-Anteil | | |

Als Rückseitenschicht wurde eine 100 μm dicke dreischichtigen Blasfolie mit der Schichtfolge Schicht A (Dowlex 2045G, Dow, lineares LDPE), Schicht B (Affinity PL1850G, Dow, Polyolefin-Plastomer, und Schicht C (Dowlex 2045G + Affinity PL1850G) verwendet.

Es wurde die Abdichtungsmembran dadurch hergestellt, dass Deckschicht und Kernschicht auf die Schicht A der Rückseitenschicht durch Coextrusion aufextrudiert wurden. Die Kernschicht wurde mittels UV-Bestrahlung durch die transparente Rückseitenschicht vernetzt. Zur UV-Bestrahlung wurde die für die Beispiele 1 bis 9 eingesetzte UV-Lampe verwendet.

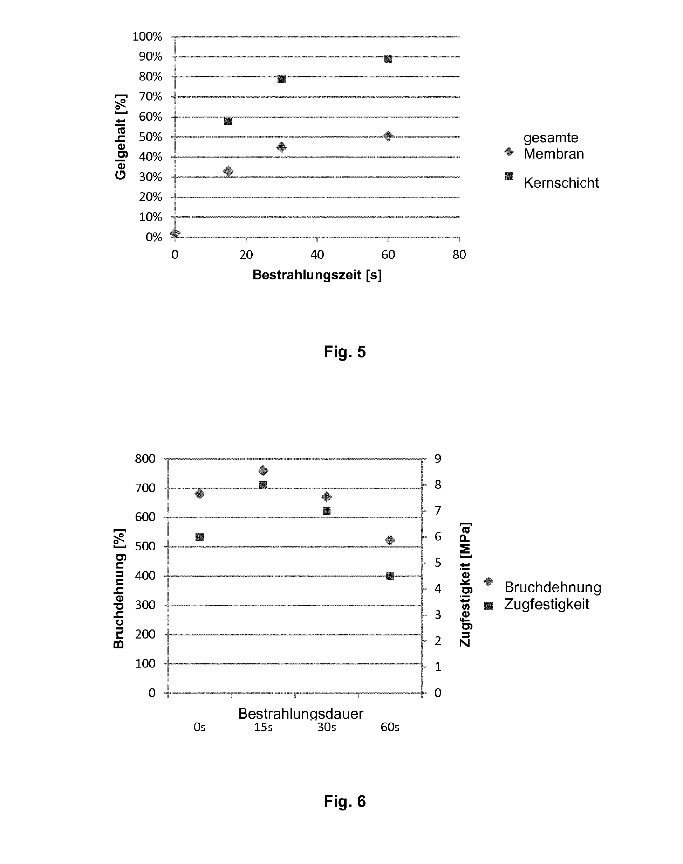

Die Schichtdicke der Deckschicht betrug 0,3 mm. Die Schichtdicke der Kernschicht betrug 1,1 mm. Fig. 4 zeigt einen Querschnitt einer Abdichtungsmembran gemäß Beispiel 10. Die Gelgehalte der Kernschicht wurden wie vorstehend ermittelt. In Abhängigkeit von der Bestrahlungszeit (0, 20, 40 und 60 s) sind diese in Fig. 5 bezogen auf die gesamte Membran und lediglich bezogen auf die Kernschicht wiedergegeben.

Ferner wurden Zugversuche bei 70°C entsprechend der Prüfnorm EN ISO 527-3 (Hantel Nr. 5) mit einer konstanten Traversengeschwindigkeit von 100 mm/min (400 %/min) zur Bestimmung der Zugfestigkeit und Bruchdehnung durchgeführt.

Es wurden Bruchdehnung und Zugfestigkeit der gemäß Beispiel 10 hergestellten Abdichtungsmembran in Abhängigkeit von der Bestrahlungsdauer untersucht, wobei die UV-Bestrahlung bei Raumtemperatur (23°C) oder bei 70°C erfolgte. Die Ergebnisse sind in Fig. 6 (23°C) und Fig. 7 (70°C) wiedergegeben.

Es zeigte sich, dass die Vernetzung der Kernschicht bei Raumtemperatur (23°C) zur leichten Erhöhung der Bruchdehnung und Zugfestigkeit nach einer relativ kurzen Bestrahlungsdauer von 15 s führt. Bei längerer Bestrahlungszeit und damit höherer Vernetzungsdichte konnte eine Abnahme der Bruchdehnung und Zugfestigkeit beobachtet werden. Bei 70°C und somit über der Schmelztemperatur der Kernschicht führte die Vernetzung zu einer Abnahme der Bruchdehnung.

**Beispiel 11**

In diesem Beispiel wurde eine Abdichtungsmembran mit einem in der Kernschicht eingebetteten Trägerelement aus einem weitmaschigen Polyestergewebe (PES 2/2 1100 SB) hergestellt. Die Zusammensetzung der in Beispiel 11 eingesetzten Deckschicht, Rückseitenschicht und Kernschicht ist in Tabelle 5 wiedergegeben.

Tabelle 5. Zusammensetzung Schichten

|  | Deckschicht | Rückseitenschicht | Kernschicht |
|---|---|---|---|
| Queo 0203 [Gew.Teile] | 25 | 25 |  |
| Queo 0210 [Gew.Teile] | 25 | 25 |  |
| Infuse 9107 [Gew.Teile] | 50 | 50 |  |
| Engage 8842 [Gew.Teile] |  |  | 75 |
| Engage 8137 [Gew.Teile] |  |  | 25 |
| ATH [Gew.Teile] | 50 |  | 25 |
| TiO$_2$ [Gew.Teile] | 12 |  |  |
| HALS [Gew.Teile] | 1 | 1 |  |
| VS [Gew.Teile] | 0,1 |  |  |
| Actigran 70 [Gew.Teile]* |  |  | 1 |
| Irgacure BP [Gew.Teile] |  |  | 1 |
| * Mengenangabe ohne SiO$_2$-Anteil |  |  |  |

Die Abdichtungsmembran wurde dadurch hergestellt, dass die Deckschicht und ein erster Teil der Kernschicht (etwa 50% bezogen auf die gesamte Dicke der Kernschicht) auf das Polyestergewebe durch Coextrusion aufextrudiert wurden. In einem zweiten Extrusionsschritt wurde der restliche Teil der Kernschicht und die Rückseitenschicht auf den zuvor im ersten Schritt erhaltenen Aufbau aufextrudiert, wobei dies auf der anderen Seite des Polyestergewebes erfolgte, so dass das Polyestergewebe ungefähr in der Mitte der Kernschicht eingebettet wurde. Die Kernschicht wurde mittels UV-Bestrahlung über die Rückseitenschicht vernetzt, wobei dieselbe UV-Lampe wie in den Beispielen 1 bis 9 verwendet wurde.

Die erhaltene Abdichtungsmembran ist in Fig. 8 im Querschnitt dargestellt. Die Schichtdicken betrugen 0,2 mm, 1,2 mm (0,5 und 0,7 mm) und 0,2 mm für Deckschicht, Kernschicht bzw. Rückseitenschicht.

Die Gelgehalte wurden wie vorstehend ermittelt. Nach 60 s Bestrahlungszeit wurden Gelgehalte in der Kernschicht erzielt, die vergleichbar sind mit den Werten, die bei derselben Bestrahlung der reinen Kernschicht ohne Deck- und Rückseitenschicht ermittelt wurden.

**Patentansprüche**

1. Verfahren zur Herstellung einer Abdichtungsmembran, umfassend

   a) die Bildung eines Membranvorprodukts umfassend in dieser Reihenfolge
   eine thermoplastische Rückseitenschicht, die mindestens ein Ethylen-Copolymer und/oder mindestens ein Ethylen-Homopolymer enthält;
   eine Kernschicht, die (i) mindestens ein Ethylen-Copolymer und einen Photoinitiator oder (ii) mindestens ein Silan-modifiziertes Ethylen-Copolymer, welches Seitengruppen mit einer hydrolysierbaren Silangruppe aufweist, umfasst, wobei das Ethylen-Copolymer und das Silan-modifizierte Ethylen-Copolymer ein thermoplastisches Elastomer sind; und
   eine thermoplastische Deckschicht, die mindestens ein Ethylen-Copolymer und/oder mindestens ein Ethylen-Homopolymer enthält, und
   b) die anschließende Vernetzung (i) des mindestens einen Ethylen-Copolymers in der Kernschicht mittels UV-Bestrahlung unter Bildung eines UV-vernetzten Ethylen-Copolymers oder (ii) des mindestens einen Silan-modifizierten Ethylen-Copolymers in der Kernschicht mittels Feuchtigkeit unter Bildung eines Silan-vernetzten Ethylen-Copolymers.

2. Verfahren nach Anspruch 1, **dadurch gekennzeichnet, dass** zur Bildung des Membranvorproduktes

   (i) die Deckschicht und die Kernschicht im Coextrusionsverfahren auf eine die Rückseitenschicht bildende oder umfassende Folie aufextrudiert werden; oder
   (ii) die Rückseitenschicht und die Kernschicht im Coextrusionsverfahren auf eine die Deckschicht bildende oder umfassende Folie aufextrudiert werden.

3. Verfahren nach Anspruch 1, **dadurch gekennzeichnet, dass** das Membranvorprodukt ein in die Kernschicht eingebettetes Trägerelement umfasst und zur Bildung des Membranvorproduktes

   (i) die Rückseitenschicht oder die Deckschicht und ein Teil der Kernschicht im Coextrusionsverfahren auf eine Seite eines Trägerelements aufextrudiert werden; und
   (ii) auf die andere Seite des Trägerelements der restliche Teil der Kernschicht und die Deckschicht oder die Rückseitenschicht aufgebracht werden, vorzugsweise in einem Coextrusionsverfahren.

4. Verfahren nach irgendeinem der Ansprüche 1 bis 3, **dadurch gekennzeichnet, dass** das E-Modul des mindestens einen Ethylen-Copolymers oder Silan-modifizierten Ethylen-Copolymers der Kernschicht des Membranvorprodukts nicht mehr als 20 MPa, bevorzugt nicht mehr als 10 MPa, ist.

5. Verfahren nach irgendeinem der Ansprüche 1 bis 4, **dadurch gekennzeichnet, dass** die Kernschicht der Membranvorstufe 70 bis 100 Gew.-%, bevorzugt 80 bis 100 Gew.-%, Ethylen-Copolymer oder Silan-modifiziertes Ethylen-Copolymer, bezogen auf den Kunststoffgehalt der Kernschicht, enthält.

6. Verfahren nach irgendeinem der Ansprüche 1 bis 5, **dadurch gekennzeichnet, dass** das Silan-modifizierte Ethylen-Copolymer ein Ethylen-Copolymer ist, das aufgepfropfte Seitengruppen mit einer hydrolysierbaren Silangruppe aufweist.

7. Verfahren nach irgendeinem der Ansprüche 1 bis 6, **dadurch gekennzeichnet, dass** das Ethylen-Copolymer oder das Silan-modifizierte Ethylen-Copolymer der Kernschicht ausgewählt ist aus Ethylen-$\alpha$-Olefin-Copolymer, Ethylen-Propylen-Copolymer oder Ethylen-Vinylacetat-Copolymer, wobei bei dem Silan-modifizierten Ethylen-Copolymer das Ethylen-Copolymer Seitengruppen mit einer hydrolysierbaren Silangruppe aufweist.

8. Verfahren nach irgendeinem der Ansprüche 1 bis 7, **dadurch gekennzeichnet, dass**, sofern das Ethylen-Copolymer kein Ethylen-Propylen-Copolymer ist, der Ethylen-Anteil im Ethylen-Copolymer oder Silan-modifizierten Ethylen-Copolymer der Kernschicht im Bereich von 40 bis 95 Gew.-%, bevorzugt im Bereich von 45 bis 85 Gew.-%, liegt oder, sofern das Ethylen-Copolymer ein Ethylen-Propylen-Copolymer ist, der Ethylen-Anteil im Ethylen-Copolymer oder Silan-modifizierten Ethylen-Copolymer der Kernschicht im Bereich von 3 bis 30 Gew.-%, bevorzugt im Bereich von 10 bis 20 Gew.-%, liegt.

9. Verfahren nach irgendeinem der Ansprüche 1 bis 8, **dadurch gekennzeichnet, dass** die UV-Bestrahlung der Kernschicht durch die Rückseitenschicht erfolgt oder die Silanvernetzung durch Luftfeuchtigkeit erfolgt.

10. Verfahren nach irgendeinem der Ansprüche 1 bis 9, **dadurch gekennzeichnet, dass** für die Rückseitenschicht eine Barrierefolie, die die Rückseitenschicht und eine Barriereschicht umfasst, verwendet wird, wobei die Barrierefolie in dem Membranvorprodukt so angeordnet wird, dass die Barriereschicht sich auf der Seite der Rückseitenschicht befindet, die der zur Kernschicht weisenden Seite der Rückseitenschicht entgegengesetzt ist, wobei die Barrierefolie bevorzugt eine Blasfolie ist.

11. Verfahren nach irgendeinem der Ansprüche 1 bis 10, **dadurch gekennzeichnet, dass** die Deckschicht und/oder die Rückseitenschicht ein Ethylen-Copolymer enthält, welches das gleiche Comonomer wie das Ethylen-Copolymer der Kernschicht aufweist.

12. Abdichtungsmembran umfassend in dieser Reihenfolge
eine thermoplastische Rückseitenschicht, die mindestens ein Ethylen-Copolymer und/oder mindestens ein Ethylen-Homopolymer enthält;
eine Kernschicht, die mindestens ein UV-vernetztes Ethylen-Copolymer oder ein feuchtigkeitsvernetztes Silan-modifiziertes Ethylen-Copolymer umfasst, wobei das Silan-modifizierte Ethylen-Copolymer ein Ethylen-Copolymer ist, welches Seitengruppen mit einer hydrolysierbaren Silangruppe aufweist, und wobei das Ethylen-Copolymer und das Silan-modifizierte Ethylen-Copolymer ein thermoplastisches Elastomer sind; und
eine thermoplastische Deckschicht, die mindestens ein Ethylen-Copolymer und/oder mindestens ein Ethylen-Homopolymer enthält.

13. Abdichtungsmembran nach Anspruch 12, erhältlich nach irgendeinem Verfahren der Ansprüche 1 bis 11.

14. Abdichtungsmembran nach Anspruch 12 oder Anspruch 13, wobei die Kernschicht eine Schichtdicke von 0,5 bis 4 mm und bevorzugt von 0,8 bis 2 mm aufweist und/oder die Rückseitenschicht und die Deckschicht jeweils eine Schichtdicke im Bereich von 0,05 bis 0,7 mm, bevorzugt von 0,08 bis 0,6 mm, aufweisen.

15. Verwendung einer Abdichtungsmembran nach irgendeinem der Ansprüche 12 bis 14 zum Abdichten eines Substrats, das Teil eines Bauwerks des Hoch- oder Tiefbaus ist, insbesondere zum Abdichten eines Bodens oder eines Dachs.

**Fig. 1a)**

Fig. 1b)

Fig. 1c)

**Fig. 2**

Bsp. 3            Bsp. 6            Bsp. 9

**Fig. 3**

**Fig. 4**

**Fig. 5**

**Fig. 6**

**Fig. 7**

**Fig. 8**

Europäisches
Patentamt

European
Patent Office

Office européen
des brevets

# EUROPÄISCHER RECHERCHENBERICHT

**Nummer der Anmeldung**

EP 15 18 9026

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/033741 A1 (PENG LICHIH R [US]) 19. Februar 2004 (2004-02-19) * Ansprüche 1,2,5 * * Seite 3; Tabelle 1 * * Absatz [0040] * * Absatz [0021] * * Absatz [0034] * * Abbildungen 1,2 * * Absatz [0016] * * Absatz [0031] * ----- | 12-15 | INV. B32B27/08 B32B27/16 B32B27/26 B32B27/30 B32B27/32 E04D5/00 |
| X | US 4 722 961 A (TOPCIK BARRY [US]) 2. Februar 1988 (1988-02-02) * Spalte 1, Zeile 25 - Zeile 28 * * Spalte 5, Zeile 7 - Zeile 47; Beispiel 1 * * Spalte 2, Zeile 15 - Zeile 17 * * Spalte 3, Zeile 44 - Zeile 53 * ----- | 1-11 | |
| T | EP 0 120 503 A1 (UNION CARBIDE CORP [US]) 3. Oktober 1984 (1984-10-03) * Seite 27; Beispiel 3 * * Seite 31; Beispiel 8 * ----- | | **RECHERCHIERTE SACHGEBIETE (IPC)** B32B E04D |
| T | Dusan Jeremic: "Polyethylene" In: "Ullmann's Encyclopedia of Industrial Chemistry", 1. August 2014 (2014-08-01), Wiley-VCH, Weinheim, XP055232483, ISBN: 978-3-527-30673-2 Seiten 1-42, DOI: 10.1002/14356007.a21_487.pub3, * Section 6.4; Seite 40 * ----- | | |
| A | US 2007/027250 A1 (JOSEPH SEBASTIAN [US] ET AL) 1. Februar 2007 (2007-02-01) * Absatz [0015] - Absatz [0016] * ----- | 1-15 | |

-/--

| Der vorliegende Recherchenbericht wurde für alle Patentansprüche erstellt | | |
|---|---|---|
| Recherchenort Den Haag | Abschlußdatum der Recherche 1. Dezember 2015 | Prüfer Flores de Paco, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**Europäisches Patentamt**
**European Patent Office**
**Office européen des brevets**

# EUROPÄISCHER RECHERCHENBERICHT

Nummer der Anmeldung

EP 15 18 9026

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JP 2000 290390 A (HITACHI CABLE) 17. Oktober 2000 (2000-10-17) * Absatz [0007] - Absatz [0008] * * Absatz [0011] * * Absatz [0016] * * Absatz [0029]; Beispiele 1-6; Tabelle 1 * ----- | 1-15 | |
| A | JP 3 200491 B2 (NIPPON UNICAR CO LTD) 20. August 2001 (2001-08-20) * Absatz [0004] - Absatz [0007] * ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 1. Dezember 2015 | Flores de Paco, M |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 15 18 9026

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-12-2015

| Im Recherchenbericht angeführtes Patentdokument | Datum der Veröffentlichung | Mitglied(er) der Patentfamilie | Datum der Veröffentlichung |
|---|---|---|---|
| US 2004033741 A1 | 19-02-2004 | KEINE | |
| US 4722961 A | 02-02-1988 | KEINE | |
| EP 0120503 A1 | 03-10-1984 | AT 26285 T | 15-04-1987 |
| | | AU 579996 B2 | 22-12-1988 |
| | | AU 2618884 A | 04-10-1984 |
| | | BR 8401469 A | 13-11-1984 |
| | | CA 1219400 A | 17-03-1987 |
| | | DD 219203 A5 | 27-02-1985 |
| | | DE 3462900 D1 | 07-05-1987 |
| | | EP 0120503 A1 | 03-10-1984 |
| | | ES 8505701 A1 | 01-10-1985 |
| | | FI 841249 A | 30-09-1984 |
| | | GR 81915 B | 12-12-1984 |
| | | HU 196081 B | 28-09-1988 |
| | | IE 57139 B1 | 06-05-1992 |
| | | IL 71357 A | 31-03-1987 |
| | | IN 160137 B | 27-06-1987 |
| | | MA 20079 A1 | 01-10-1984 |
| | | MX 163277 B | 31-03-1992 |
| | | NO 841236 A | 01-10-1984 |
| | | NZ 207668 A | 08-08-1986 |
| | | PH 20787 A | 14-04-1987 |
| | | PT 78329 A | 01-04-1984 |
| | | RO 91263 A1 | 30-04-1987 |
| | | SG 82589 G | 06-07-1990 |
| | | WO 8403888 A1 | 11-10-1984 |
| | | YU 57784 A | 30-06-1986 |
| US 2007027250 A1 | 01-02-2007 | CA 2550322 A1 | 28-01-2007 |
| | | US 2007027250 A1 | 01-02-2007 |
| JP 2000290390 A | 17-10-2000 | KEINE | |
| JP 3200491 B2 | 20-08-2001 | JP 3200491 B2 | 20-08-2001 |
| | | JP H06210809 A | 02-08-1994 |

EPO FORM P0461

Für nähere Einzelheiten zu diesem Anhang : siehe Amtsblatt des Europäischen Patentamts, Nr.12/82